# EUROPÄISCHE PATENTSCHRIFT

(11) **EP 1 735 180 B1**
(45) Veröffentlichungstag und Bekanntmachung des Hinweises auf die Patenterteilung: **18.11.2009**
(21) Anmeldenummer: 05740602.7
(22) Anmeldetag: 05.04.2005
(51) Int. Cl.: B60N 2/22

(54) **ANTRIEBSEINHEIT FÜR EINEN FAHRZEUGSITZ**
DRIVE UNIT FOR A VEHICLE SEAT
UNITE D'ENTRAINEMENT POUR UN SIEGE DE VEHICULE

(30) Priorität: 15.04.2004 DE 102004019465
(43) Veröffentlichungstag der Anmeldung: 27.12.2006
(73) Patentinhaber: KEIPER GmbH & Co. KG, 67657 Kaiserslautern (DE)
(72) Erfinder: SCHÜLER, Rolf, 42579 Heiligenhaus (DE); BERRES, Michael, 51375 Leverkusen (DE); BOSSMANNS, Bernd, 40699 Erkrath (DE); KALMUS, Karsten, 44799 Bochum (DE); SCHUHN, Christoph, 40468 Düsseldorf (DE); VOSS, Heinz, 51375 Leverkusen (DE)
(74) Vertreter: Patentanwälte Hosenthien-Held und Dr. Held
(86) Internationale Anmeldenummer: PCT/DE2005/000635
(87) Internationale Veröffentlichungsnummer: WO 2005/100082

(56) Entgegenhaltungen:
- DE-A1- 3 301 139
- GB-A- 879 040
- GB-A- 2 383 101
- US-A- 1 463 638
- US-B1- 6 515 399

## Beschreibung

Die Erfindung betrifft eine Antriebseinheit für einen Fahrzeugsitz mit den Merkmalen des Oberbegriffs des Anspruches 1.

Derartige Antriebseinheiten werden für motorisch einstellbare Fahrzeugsitze eingesetzt, um durch Einstellen einzelner Komponenten relativ zueinander eine für den Insassen optimale Sitzposition zu erreichen. Es sind dabei sowohl bürstenkommutierte als auch elektronisch kommutierte Motoren bekannt. Mittels der Getriebestufe kann die Drehzahl herabgesetzt und zugleich das abgegebene Drehmoment erhöht werden.

Die US.1,463,538 A beschreibt eine Antriebseinheit der eingangs genannten Art mit einem Schaltgetriebe, in welchem Zahnräder verschiebbar sind, um die Drehrichtung des Abtriebs umzukehren.

Der Erfindung liegt die Aufgabe zu Grunde, eine Antriebseinheit der eingangs genannten Art ,vorzugsweise unter Verwendung elektronisch kommutierter Motoren, zu verbessern. Diese Aufgabe wird erfindungsgemäß durch eine Antriebseinheit mit den Merkmalen des Anspruches 1 gelöst. Vorteilhafte Ausgestaltungen sind Gegenstand der Unteransprüche.

Mit einem Schaltgetriebe kann die Drehrichtung des Abtriebs wahlweise zwischen den beiden möglichen Abtriebsdrehrichtungen geschaltet werden, ohne die Drehrichtung des Motors ändern zu müssen. Dies vereinfacht die Elektronik für den Motor erheblich. Eine solche Antriebseinheit mit einem Schaltgetriebe ist vorzugsweise in einem Einsteller eines Fahrzeugsitz einsetzbar, beispielsweise in einem Lehnenneigungseinsteller desselben. Das Einsatzgebiet ist aber nicht auf Fahrzeugsitze beschränkt. Vielmehr kann ein Einsatz auch an einer anderen Stelle in einem Fahrzeug erfolgen, beispielsweise in einem Fensterheber, einem Außenspiegel oder einem Schiebedach. Mit einem Schaltgetriebe kann auch zwischen zwei unterschiedlichen Getriebeübersetzungen ausgewählt werden.

Elektronisch kommutierte, bürstenlose Motoren bieten einen hohen elektromechanischen Wirkungsgrad bei gleichzeitig geringem Bauraum und niedrigem Geräuschniveau. Mehrere Motoren können mit der zugehörigen Elektronik ohne wesentlichen Zusatzaufwand in ihrer Drehzahl oder Position miteinander synchronisiert werden. Die Art der Kommutierung bietet die Möglichkeit, einen Blockierzustand zu erkennen, ein maximal zulässiges Blockiermoment elektrisch zu definieren und die Temperatur zu überwachen, und damit eine gegenüber Bürstenmotoren höhere Energiedichte des elektromagnetischen Wandlers zu realisieren, was eine deutliche Reduktion von Bauraum und Gewicht erlaubt. Die Integration der Steuerelektronik in den Motor bietet Vorteile bei der Erkennung von Blocksituationen, der Auswertung vorhandener Sensoren und der Abstimmung zwischen Elektronikfunktion und anzutreibender Vorrichtung, beispielsweise bei der Aufnahme oder Programmierung von Parametern des Motorverhaltens.

Im Gegensatz zu den in den genannten Anwendungsgebieten üblichen, elektronisch kommutierten Motoren mit Drehrichtungsumkehr, bei welchen die zweite Rotordrehrichtung durch die Umkehr der Drehrichtung des umlaufenden Magnetfeldes erreicht wird, kommen im Sinne dieser Erfindung nur Motoren zur Anwendung, deren Drehrichtung nicht änderbar ist. Im Falle zweier Rotoren, beispielsweise einem Innenrotor und einem Außenrotor, rotiert - vom Abtrieb aus betrachtet - der Innenrotor beispielsweise immer im Uhrzeigersinn und der Außenrotor gegen den Uhrzeigersinn, ohne dass die den Rotoren zugeordneten Drehrichtungen jemals auf elektronischem Wege geändert werden. Derartige Motoren sind auf unterschiedliche Weise so auslegbar, dass trotz minimalem Aufwand an elektronischen Bauteilen die Rotation erzeugt wird und einige wesentliche Vorteile der elektronischem Kommutierung, wie Wirkungsgradsteigerung, Geräuschreduzierung und Blockierstromerkennung realisierbar sind, ohne den sonst üblichen Aufwand für Bauteile, Bauräume und Gewicht akzeptieren zu müssen.

Mit zwei Rotoren, die mit unterschiedlicher Drehzahl und/oder Drehrichtung rotieren, kann eine Relativbewegung erzeugt werden, die gegenüber einem Absolutwert der Drehzahl gering ist und von der Getriebestufe weiter untersetzt werden kann, um das abtriebsseitige Drehmoment zu erhöhen. Die unterschiedliche Drehzahl und/oder Drehrichtung der Rotoren wird auf konstruktiv einfache Weise vorzugsweise dadurch erreicht, dass die Rotoren untereinander eine unterschiedliche Anzahl von Polen aufweisen, die wiederum vorzugsweise von der Anzahl der Statorpole verschieden ist, so dass auch die Drehzahl der Rotoren von der Drehzahl des Magnetfelds des Stators abweicht.

Ein Verhältnis der Statorpole zu den Polen des Rotors, das von 2:3 und 3:2 verschieden ist, ermöglicht Drehzahl- und/oder Drehrichtungsunterschiede, womit - beispielsweise mittels zweier Rotoren - eine kleine Relativbewegung erzeugt werden kann, die zu einer Drehzahluntersetzung mit gleichzeitiger Erhöhung des abtriebsseitigen Drehmomentes führt.

Für einen geräuscharmen oder -losen Lauf des Motors mit geringer Reibung, geringer Wärmeentwicklung und geringem Energieverbrauch ist der Stator vorzugsweise elektronisch kommutiert, während die Rotoren vorzugsweise Permanentmagneten als Pole tragen. Dabei trägt in Umfangsrichtung des Stators vorzugsweise genau jeder zweite Statorpol eine Spule, um den magnetischen Fluss über den benachbarten Statorpol zu schließen. Stator und Rotoren können bezüglich der zentralen Achse in radialer Abfolge oder axialer Abfolge (Scheibenläufer) angeordnet sein. Zur Erzeugung der unterschiedlichen Drehzahlen können die Pole von Stator und Rotoren sich beispielsweise um zwei unterscheiden.

Für ein Sperren eines von der Abtriebsseite eingeleiteten Drehmomentes kann beispielsweise vorgesehen sein, dass der Motor mit einem Motorritzel ein Zwischenrad antreibt, welches formschlüssig oder reibschlüssig sperrbar ist.

Der Motor ist vorzugsweise aus mehreren Motorvarianten auswählbar, in der radialen Ausführung beispielsweise ein Innenläufer-, ein Außenläufer- oder ein Doppelläufermotor. In Verbindung mit einer aus mehreren Getriebestufentypen auswählbaren Getriebestufe, wobei auch mehrere Getriebestufen hintereinander geschaltet sein können, steht ein modulares System zur Verfügung, das mit wenigen Modulen eine große Anzahl von Antriebseinheiten schafft, um die verschiedenen Anforderungen abzudecken.

Eine Ausbildung der Getriebestufe als Differentialgetriebe, welches unter Ausnutzung zweier unterschiedlicher Drehzahlen und/oder Drehrichtungen eine Bewegung eines Abtriebs um eine Achse erzeugt, können besonders kleine Relativbewegungen erzeugt werden, die eine geringe Drehzahl am Abtrieb ermöglichen. Dabei können die zwei unterschiedlichen Drehzahlen und/oder Drehrichtungen vom Motor in die Getriebestufe geleitet werden oder von der Getriebestufe selber erzeugt und durch Festlegen eines Bauteils mit einer solchen Drehzahl am anderen Bauteil als Abtrieb abgegriffen werden.

Die Getriebestufe ist vorzugsweise an einen Motor mit einem vorzugsweise elektronisch kommutierten Stator und wenigstens einem mit dem Stator magnetisch wechselwirkenden, um die Achse rotierenden, Permanentmagnete tragenden Rotor angeschlossen. Ein solcher Motor ist geräuscharm und läuft mit geringer Reibung. Die Getriebestufe kann in einer Reibrad-Ausfiihrung mit hohlen und/oder massiven Rollen oder einer Zahnrad-Ausführung verwirklicht sein, wobei die erstgenannte Ausführung einfacher herzustellen ist, mit hohlen Rollen auch gewichtsreduzierend ist, und zugleich als Lager für einen Rotor dienen kann.

Neben dem elektromechanischen Wirkungsgrad des Motors ist für den Gesamtwirkungsgrad der Antriebseinheit auch der Wirkungsgrad der Getriebestufe von Bedeutung, weshalb koaxiale, vollsymmetrische Getriebebauformen mit einer möglichst geringen Anzahl von Einzellagern, insbesondere in Reibrad-Ausführung ohne jegliche Zusatzlagerung sondern vielmehr mit eigener Lagerfunktion, bevorzugt sind.

Die Getriebestufe kann als einstufiges Planeten-Differentialgetriebe mit einem Sonnenrad, einem Satz Planetenrollen oder -räder und einem Hohlrad ausgebildet sein, wobei das Sonnenrad und das Hohlrad drehfest mit je einem Rotor des Motors verbunden sind, während ein die Planetenrollen oder -räder tragender Steg als Abtrieb dient.

Die Getriebestufe kann aber auch als mehrstufiges (d.h. wenigstens zweistufiges) Planeten-Differentialgetriebe mit einem oder mehreren Sonnenrädern, einem oder mehreren Sätzen innerer Planetenrollen, einem oder mehreren Sätzen äußerer Planetenrollen und einem oder mehreren Außenringen ausgebildet sein, welche konzentrisch zur zentralen Achse angeordnet sind, wobei die Sonnenräder bzw. die Außenringe bezüglich der Achse axial benachbart angeordnet sind. Unterschiedliche Außendurchmesser der zwei Sonnenräder bzw. unterschiedliche Innendurchmesser der zwei Außenringe (oder jeweils unterschiedliche Elastizitäten) führen zu geringen Drehzahldifferenzen.

Die Getriebestufe kann auch als einstufiges Planeten-Differentialgetriebe mit einem oder mehreren Sonnenrädern, einem Satz vorzugsweise ungestufter Planetenrollen und einem oder mehreren Hohlrädern ausgebildet sein, welche konzentrisch zur zentralen Achse angeordnet sind, wobei die Sonnenräder bzw. Hohlräder bezüglich der Achse axial benachbart angeordnet sind. Unterschiedliche Elastizitäten und unterschiedliche Außendurchmesser der zwei Sonnenräder bzw. unterschiedliche Innendurchmesser der zwei Hohlräder führen zu geringen Drehzahldifferenzen.

Die besagten Drehzahldifferenzen können beispielsweise abgegriffen werden, indem von den zwei besagten benachbarten Getriebeelementen mit unterschiedlichem Durchmesser eines gehäusefest und eines mit dem Abtrieb verbunden ist. In der Ausführung mit zwei Außenringen steht der- gehäusefeste mit dem Stator in Verbindung, während das als Antrieb dienende Sonnenrad drehfest mit einem Rotor des Motors verbunden ist.

Um einerseits eine Vorspannung zum Zusammenhalt und zur Zentrierung der Getriebestufe aufzubringen und andererseits Toleranzen auszugleichen, weisen das Hohlrad oder der Außenring vorzugsweise einen elastischen Metallring und ein den Metallring aufnehmendes Elastomerbett auf. Eine das Elastomerbett mit dem Metallring aufnehmende und axial sichernde Halterung ist vorzugsweise mit einer Glocke des als Hohlwelle ausgebildeten Abtriebs verbunden.

Zum Schalten des Schaltgetriebes ist in einer einfach herzustellenden Ausführung vorzugsweise ein durch eine Schaltspule definierter Elektromagnet vorgesehen, der mit zwei einander abstoßenden Permanent-Haltemagneten zusammenwirkt, welche geometrisch mit zwei benachbarten, ähnlichen Getriebeelementen gekoppelt sind, um diese reibschlüssig oder formschlüssig festzustellen.

Die Getriebestufe ist vorzugsweise aus mehreren Getriebestufentypen auswählbar. In Verbindung mit einem aus mehreren Motorvarianten auswählbaren Motor steht ein modulares System zur Verfügung, das mit wenigen Modulen eine große Anzahl von Antriebseinheiten schafft, um die verschiedenen Anforderungen abzudecken.

Im folgenden ist die Erfindung anhand eines in der Zeichnung dargestellten Ausführungsbeispiels mit verschiedenen Motorvarianten, Getriebestufentypen und jeweiligen Abwandlungen hierzu näher erläutert. Es zeigen
- Fig. 1: eine Prinzipskizze des Ausführungsbeispiels,
- Fig. 2A: eine erste Motorvariante,
- Fig. 2B: eine zweite Motorvariante,
- Fig. 2C: eine dritte Motorvariante,

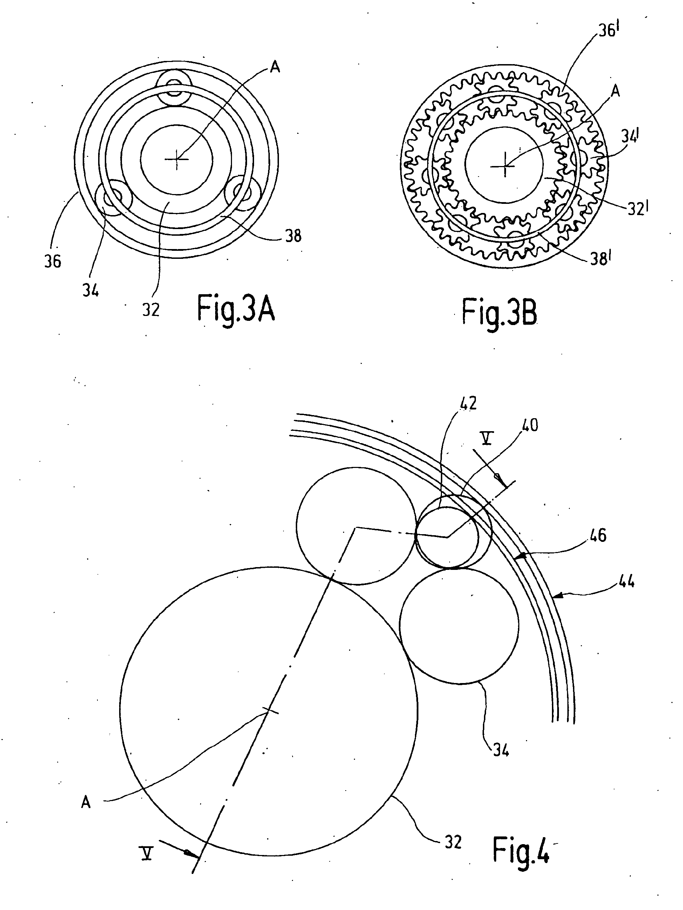

- Fig. 3A: ein erster Getriebestufentyp in Reibrad-Ausführung,
- Fig. 3B: der erste Getriebestufentyp in Zahnrad-Ausführung,

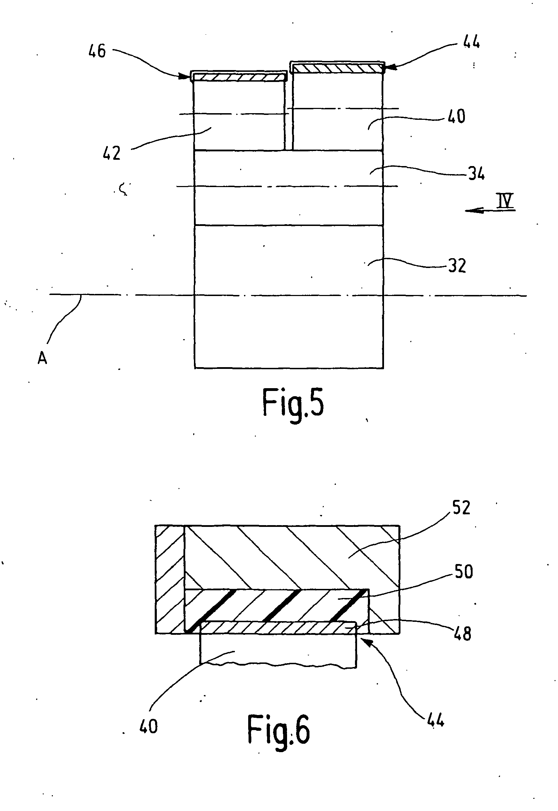

- Fig. 4: eine schematische Teilansicht eines zweiten Getriebestufentyps mit Blick in Richtung des Pfeiles IV aus Fig. 5,
- Fig. 5: einen Schnitt entlang der Linie V-V in Fig. 4,
- Fig. 6: eine vergrößerte Darstellung von Fig. 5,

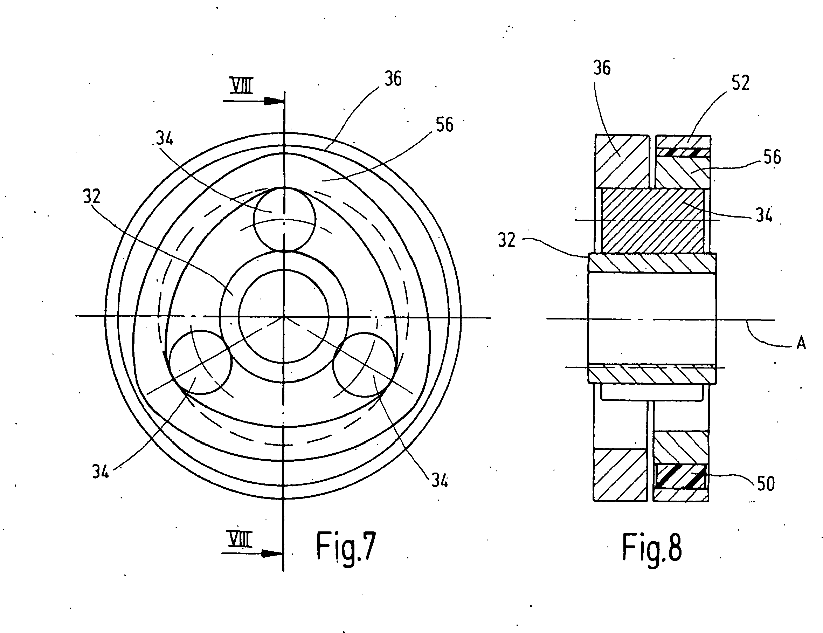

- Fig. 7: eine schematische Ansicht eines dritten Getriebestufentyps,
- Fig. 8: einen Schnitt entlang der Linie VIII-VIII in Fig. 7,
- Fig. 9: eine Stirnansicht einer schaltbaren Getriebestufe,
- Fig. 10: eine Seitenansicht zu Fig. 9,
- Fig. 11: einen Schnitt entlang der Linie XI-XI von Fig. 9,
- Fig. 12: eine Abwandlung der Getriebestufe von Fig. 9,
- Fig. 13A: eine Feststelleinrichtung für den Motor zum Sperren abtriebsseitig einge- leiteter Drehmomente im sperrenden Zustand, und
- Fig. 13B: die Feststelleinrichtung von Fig. 13A mit anlaufendem Motor.

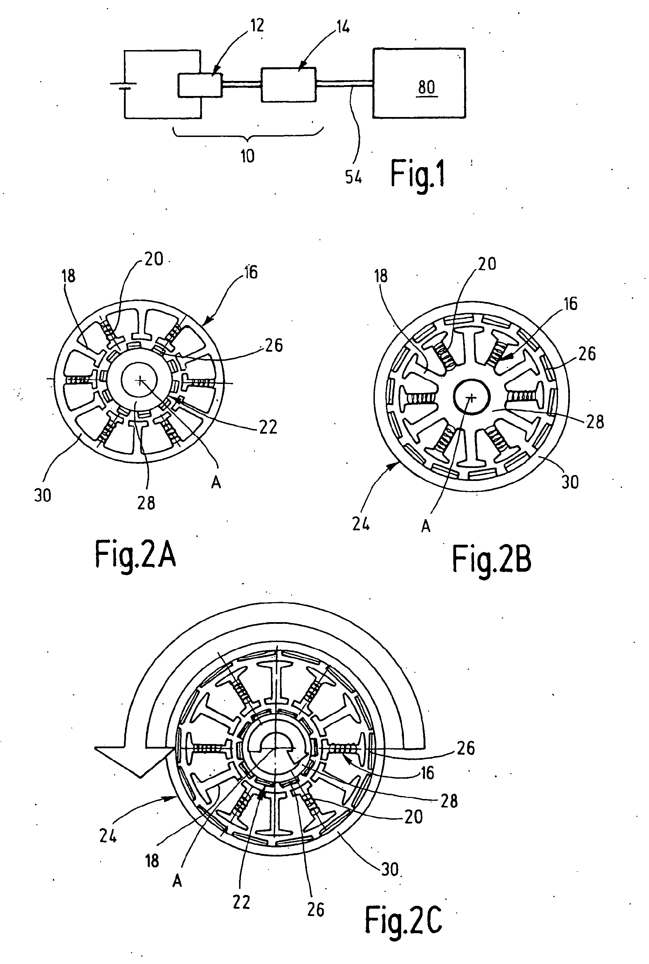

Eine Antriebseinheit 10 weist einen Motor 12 und eine abtriebsseitig vom Motor 12 vorgesehene Getriebestufe 14 auf. Der Motor 12 ist ein elektronisch kommutierter Motor mit einem Stator 16, dessen Statorpole 18 sternförmig um eine Achse A angeordnet sind. Die in Fig. 2A bis 2C senkrecht zur Zeichenebene verlaufende Achse A definiert die nachfolgenden Richtungsangaben in Zylinderkoordinaten. Auf jeden zweiten der insgesamt zwölf Statorpole 18 ist eine Spule 20 gewickelt, wobei die Spulen 20 von einer nicht näher dargestellten, in den Motor 12 integrierten, Gleichstrom gespeisten Elektronik periodisch und zeitlich versetzt zueinander bestromt werden, um ein räumlich umlaufendes Magnetfeld zu erzeugen.

In drei verschiedenen Motorvarianten ist der Motor 12 als Innenläufermotor mit einem radial innerhalb des Stators 16 angeordneten Innenrotor 22 (erste Motorvariante), als Außenläufermotor mit einem radial außerhalb des Stators 16 angeordneten Außenrotor 24 (zweite Motorvariante) oder als Doppelläufermotor, kurz Duomotor, mit einem Innenrotor 22 und einem Außenrotor 24 (dritte Motorvariante) versehen. In allen Fällen drehen sich Innenrotor 22 bzw. Außenrotor 24 um die Achse A und tragen entlang der dem Stator 16 zugewandten Umfangsfläche Permanentmagnete 26, die in Umfangsrichtung abwechselnd gepolt sind. Alle in der vorliegenden Anmeldung verwendeten Permanentmagnete 26 weisen vorzugsweise eine hohe Permeabilität auf, beispielsweise indem sie Metalle aus der Gruppe der seltenen Erden enthalten. Ein Innenrückschlußring 28, welcher bei der ersten und dritten Motorvariante dem Innenrotor 22 und bei der zweiten Motorvariante dem Stator 16 zugeordnet ist, und ein Außenrückschlußring 3 0, welcher bei der ersten Motorvariante dem Stator 16 und bei der zweiten und dritten Motorvariante dem Außenrotor 24 zugeordnet ist, schließen den magnetischen Fluss. Die beiden Rückschlußringe 28 und 30 können gegebenenfalls zugleich als Träger der Permanentmagneten 26 dienen. Der Außenrotor 24 liefert aufgrund der an einem größeren Radius (im Vergleich zum Innenrotor 22) wirksamen Magnetkräfte ein größeres Drehmoment. Alle drei Motorvarianten sind vorzugsweise in Hohlwellenbauweise ausgebildet, d.h. der Bereich um die Achse A ist freigelassen.

Die Anzahl der Permanentmagnete 26 ist so gewählt, dass ihr Verhältnis zur Anzahl der Statorpole 18 ungleich 2:3 oder 3:2 ist, wodurch die Rotation von Innenrotor 22 bzw. Außenrotor 24 von der Rotation des Magnetfeldes im Stator 16 abweicht. Vorliegend weist der Innenrotor 22 zehn Permanentmagnete 26 und der Außenrotor 24 vierzehn Permanentmagnete 26 auf. Entsprechend der unterschiedlichen Anzahl der Permanentmagnete 26 rotieren bei der dritten Motorvariante (Duomotor) der Innenrotor 22 und der Außenrotor 24 vorliegend mit verschiedenen Drehzahlen (5:7) und zudem in entgegengesetzte, nicht umkehrbare Drehrichtungen, was in der Zeichnung durch Pfeile angedeutet ist.

Statt des radialen Aufbaus des Motors kann auch ein axialer Aufbau verwirklicht sein, d.h. die Rotoren (Scheibenläufer) und der Stator sind axial hintereinander angeordnet.

Die Getriebestufe 14 dient dazu, die Drehzahl des Motors 12 zu untersetzen bei gleichzeitiger Übersetzung des vom Motor 12 abgegebenen Drehmomentes. Die Getriebestufe 14 ist als Differentialgetriebe ausgebildet, wobei nachfolgend verschiedene Typen beschrieben sind. Zu jedem Typ existiert sowohl eine Ausführung als Zahnrad-Planeten-Differentialgetriebe mit flachen, gezahnten Planetenrädern als auch eine bevorzugte Ausführung als Reibrad-Planeten-Differentialgetriebe mit zylindrischen, glatten Planetenrollen, welche - ebenso wie das Sonnenrad - hohl oder massiv sein können. Eine Hohlwellenbauweise der Getriebestufe 14, bei welcher der Bereich um die zentrale Achse A frei bleibt, ist bevorzugt.

Der erste Getriebestufentyp ist ein einstufiges Planeten-Differentialgetriebe, welches zunächst in der Reibrad-Ausführung beschrieben wird. Die Getriebestufe 14 fluchtet mit der zentralen Achse A des Motors 12. Um die Achse A herum ist ein Sonnenrad 32 angeordnet, auf dessen Umfangsfläche drei Planetenrollen 34 entlang rollen, welche wiederum von einem Hohlrad 36 umschlossen werden. Das Hohlrad 36 sorgt für eine radiale Vorspannung und damit für ein gutes Abrollen der Planetenrollen 34 ohne Schlupf. Ein ringförmiger Steg 38 trägt auf axialen Zapfen die Planetenrollen 34.

Die bevorzugte Kombination dieses ersten Getriebestufentyps erfolgt mit der dritten Motorvariante, dem Duomotor, kann aber auch mit den anderen Motorvarianten, einschließlich bürstenkommutierter Motoren, erfolgen. Der Innenrotor 22 ist mit dem Sonnenrad 32 drehfest verbunden, während der Außenrotor 24 mit dem Hohlrad 36 drehfest verbunden ist. Der Steg 38 dient als Abtrieb der Antriebseinheit 10. Die jeweiligen Durchmesser sind in ihren Dimensionen auf die Drehzahlen, Drehmomente und Drehrichtungen der Rotoren 22 und 24 abgestimmt. Vorzugsweise sind die axialen Längen von Sonnenrad 32, Planetenrollen 34 und Hohlrad 36 so groß gewählt, dass mittels der Getriebestufe 14 eine Lagerung des Innenrotors 22 und des Außenrotors 24 relativ zum Stator 16 erfolgt.

Die Zahnrad-Ausfiihrung stimmt bis auf die Oberflächenbeschaffenheit der Bauteile mit der Reibrad-Ausführung überein, weshalb die Bezugszeichen der entsprechenden Bauteile um ein Apostroph ergänzt sind. Sonnenrad 32', Planetenräder 34' und Hohlrad 36' sind jeweils gezähnt, sind aber in gleicher Weise mit dem Motor 12 gekoppelt und führen die gleichen Relativbewegungen aus, wobei der Steg 38 wieder als Abtrieb dient.

Der zweite Getriebestufentyp ist ein mehrstufiges Planeten-Differentialgetriebe, welches wiederum in der radial geschichteten Reibrad-Ausführung beschrieben wird, aber auch in einer Zahnrad-Ausführung möglich ist. Ebenso können wieder massive und/oder hohle Bauteile Verwendung finden. Um die Achse A herum ist wieder ein Sonnenrad 32 angeordnet, auf dessen Umfangsfläche eine Lage innerer Planetenrollen 34 angeordnet ist. In jedem Zwischenraum eingelegt befinden sich axial hintereinander angeordnet eine erste äußere Planetenrolle 40 und eine zweite äußere Planetenrolle 42, die jeweils ungefähr die halbe axiale Länge einer inneren Planetenrolle 34 aufweisen, wobei die zweite äußere Planetenrolle 42 einen gegenüber der ersten äußeren Planetenrolle 40 geringfügig kleineren Durchmesser hat, was sich beispielsweise durch die Verwendung von Zylinderrollen einerseits aus der metrischen und andererseits aus der zölligen Normreihe auf einfache Weise realisieren läßt. Anstelle der Zylinderform kann auch eine andere Form für die Wälzkörper verwendet werden.

Ein die ersten äußeren Planetenrollen 40 radial außen umschließender erster äußernring 44 und ein die zweiten äußeren Planetenrollen 42 radial außen umschließender zweiter Außenring 46, welche jeweils als Hohlrad dienen, spannen in radialer Richtung die Planetenrollen 40, 42 und 34 über alle Kontaktstellen gleichzeitig zum Sonnenrad 32 hin vor. Diese Vorspannung der zwei radial geschichteten Rollenreihen sorgen dafür, dass sich alle Rollen gegenseitig abstützen und sich eine konzentrische radialsymmetrische Anordnung ergibt, welche ohne Schlupf ist, so dass sich ein hoher Wirkungsgrad der Getriebestufe 14 ergibt. Ein Steg und damit eine innere Lagerung der Planetenrollen ist nicht erforderlich, aber nicht ausgeschlossen. Das Sonnenrad 32 kann stirnseitig mit radial nach außen weisenden Borden versehen sein, um die Planetenrollen in axialer Richtung zu sichern, was auch bei den anderen Getriebestufentypen möglich ist.

Die beiden Außenringe 44 und 46 sind prinzipiell gleich aufgebaut, so dass im folgenden nur der erste Außenring 44 beschrieben ist. Der erste Außenring 44 weist einen elastischen Metallring 48 aus Stahl auf, welcher auf seiner radial innen liegenden Seite an den ersten äußeren Planetenrollen 40 anliegt und mit einem kleineren Innendurchmesser ausgebildet ist, als es die geometrische Anordnung der umschlossenen Rollen erfordert, um die Vorspannung aufzubringen. Auf der radial außen liegenden Seite und an den beiden axialen Stirnseiten liegt der Metallring 48 in einem Elastomerbett 50 des ersten Außenrings 44. Der Metallring 48 und das aus Kunststoff bestehende Elastomerbett 50 sorgen zusammen für eine sehr gleichmäßige Anpressung. Zudem dämmt das Elastomerbett 50 die Laufgeräusche und mildert Momentenstöße. Der beschriebene zweiteilige Aufbau des ersten Außenrings 44 kann auch bei dem Hohlrad 36 bzw. 36' des ersten Getriebestufentyps verwirklicht sein. Zur axialen Sicherung des ersten Außenrings 44 mit seinem Metallring 48 und seinem Elastomerbett 50 ist eine Halterung 52 vorgesehen, welche zum Zwecke der Montage zweiteilig ausgebildet ist und das Elastomerbett 50 radial außen und mit zwei Borden stirnseitig übergreift, was auch bei den anderen Getriebestufentypen möglich ist.

Für eine Rotationssymmetrie, welche zur Vermeidung von Laufgeräuschen beiträgt, sind der Metallring 48 und das Elastomerbett 50 in Umfangsrichtung Vorzugsweise durchgehend ausgebildet, jedoch können sie auch geschlitzt oder geteilt, insbesondere pfeilförmig geschlitzt sein, beispielsweise wenn sie drehfest mit der Halterung 52 verbunden sein sollen. Um die in der Getriebestufe 14 entstehende Wärme abzuführen, ist das Elastomerbett 50 vorzugsweise gut wärmeleitfähig, beispielsweise durch Einlagerung von metallischen oder anderen wärmeleitfähigen Fasern oder Füllen von Hohlräumen oder Ausschnitten mit einem wärmeleitfähigen Material. Zwischen dem Metallring 48 und dem Elastomerbett 50 kann auch eine Wärmeleitpaste vorgesehen sein.

Der kleine Durchmesserunterschied zwischen den ersten äußeren Planetenrollen 40 und den zweiten äußeren Planetenrollen 42 und in Folge davon des Innendurchmessers des ersten Außenrings 44 und des zweiten Außenrings 46 bedingt einen Unterschied in den Drehzahlen der beiden Außenringe 44 und 46. Diese kleine Drehzahldifferenz wird für eine große Untersetzung (beispielsweise 200) der Getriebestufe 14 ausgenutzt, wenn sie an den Motor 12 angeschlossen ist.

Die bevorzugte Kombination dieses zweiten Getriebestufentyps erfolgt mit der ersten oder zweiten Motorvariante, kann aber auch mit anderen Motorvarianten, einschließlich bürstenkommutierter Motoren, erfolgen. Der erste Außenring 44, genauer gesagt dessen Halterung 52, wird beispielsweise gehäusefest, d.h. mit dem Stator 16 verbunden. Das als Antrieb dienende Sonnenrad 32 wird mit dem Innenrotor 22 (bzw. dem Außenrotor 24 oder einem Steg) verbunden, während der zweite Außenring 46 als Abtrieb 54 dient. Hierbei wird die beispielsweise als Hohlwelle ausgebildete Abtriebswelle mit einem glockenartigen Endstück am zweiten Außenring 46 angebracht, genauer gesagt an dessen Halterung 52. Vorliegend dreht sich der zweite Außenring 46 gleichsinnig zum Sonnenrad 32. Der gewählte Aufbau des zweiten Getriebestufentyps macht eine gesonderte Lagerung des Sonnenrades 32 und damit des Innenrotors 22 (bzw. Außenrotors 24) sowie des zweiten Außenrings 46, d.h. des Abtriebs 54, entbehrlich, schließt sie aber nicht aus. Die Lagerung des Innenrotors 22 (bzw. Außenrotors 24) in der Getriebestufe 14 hat jedoch den Vorteil, dass sie spielfrei ist und damit einen geräuschlosen Lauf des Innenrotors 22 (bzw. Außenrotors 24) bewirkt.

In abgewandelter Ausführung des zweiten Getriebestufentyps ist der (kleinere) zweite Außenring 46 gehäusefest und der (größere) erste Außenring 44 der Abtrieb, was eine gegensinnige Rotation von Sonnenrad 32 und erstem Außenring 44 bewirkt. Mit einem wahlweisen Festlegen der Außenringe 44 und 46 am Gehäuse und einem daraus resultierenden Wechsel des Abtriebs, beispielsweise mittels zweier Klinkensysteme oder einer später genauer beschriebenen Schaltung, kann eine Richtungsumkehr des Abtriebs bei gleichbleibender Drehrichtung des Sonnenrades 32 erreicht werden. Die erforderliche Elektronik des Motors 12 kann dann deutlich einfacher aufgebaut werden, was die Herstellung des Motors 12 vereinfacht.

Der zweite Getriebestufentyp kann weiter abgewandelt werden durch eine andere Anzahl von Rollensätzen. Allgemein können eine oder mehrere, axial hintereinander angeordnete Sonnenräder, eine gleiche Anzahl von inneren Planetenrollen in entsprechender axialer Anordnung, gegebenenfalls ein Satz von mittleren Planetenrollen zur Synchronisation, ein oder mehrere Sätze von axial hintereinander angeordneten, äußeren Planetenrollen und eine gleiche Anzahl von Außenringen in entsprechender axialer Anordnung vorgesehen sein. Die kleine Drehzahldifferenz wird entsprechend der beschriebenen Weise zwischen zwei benachbarten Getriebeelementen abgegriffen. Es ist auch denkbar, statt einem Sonnenrad plus einem Satz innerer Planetenrollen nur ein Sonnenrad mit entsprechend großem Durchmesser, welches direkt auf dem nächstäußeren Satz Planetenrollen rollt, und/oder statt einem Satz äußerer Planetenrollen plus einem Außenring nur einen Außenring mit entsprechend kleinem Durchmesser, welcher direkt auf dem nächstinneren Satz Planetenrollen rollt, zu verwenden.

Der dritte Getriebestufentyp ist wieder ein einstufiges Planeten-Differentialgetriebe, welches wiederum in einer radial geschichteten Reibrad-Ausführung beschrieben wird, aber auch in einer Zahnrad-Ausführung möglich ist. Die Getriebestufe 14 fluchtet mit der zentralen Achse A des Motors 12. Um die Achse A herum ist ein Sonnenrad 32 angeordnet, auf dessen Umfangsfläche drei Planetenrollen 34 entlang rollen. Auf etwa der Hälfte ihrer axialen Länge werden die ungestuften Planetenrollen 34 von einem ringförmigen ersten Hohlrad 36 umschlossen, welches eine geringe Elastizität aufweist, also relativ steif ist. Auf der anderen Hälfte ihrer axialen Länge werden die Planetenrollen 34 von einem zweiten Hohlrad 56 umschlossen, welches eine höhere Elastizität und einen kleineren Innenumfang als das erste Hohlrad 36 aufweist. Beides zusammen bedingt eine von der Kreisform abweichende, durch die Anlage an den Planetenrollen 34 leicht dreieckige Form des zweiten Hohlrades 56, welche in der Zeichnung leicht übertrieben dargestellt ist und sich im Betrieb dynamisch ändert. Die Elastizitätsunterschiede werden durch eine geeignete Materialwahl erreicht.

Die beiden Hohlräder 36 und 56 sorgen für eine radiale Vorspannung mit hoher Anpresskraft und damit für ein gutes Abrollen der Planetenrollen 34 ohne Schlupf, wobei das Sonnenrad 32 die radialen Kräfte kompensiert. Bei einem Antrieb über das Sonnenrad 32 anstatt über einen Steg braucht das Verhältnis der Hohlrad-Innenumfänge für eine Übersetzung von 200 nicht 200/199 sein, sondern kann großzügiger und damit toleranzunempfindlicher gewählt werden. Zusätzlich oder anstelle des Sonnenrades 32 kann ein die Planetenrollen lagernder Steg analog dem ersten Getriebestufentyp als Antrieb oder ein die Planetenrollen fixierender Lagerkäfig vorgesehen sein. Es können in abgewandelter Ausführung auch zwei axial hintereinander angeordnete Sonnenräder unterschiedlicher Elastizität in Kombination mit einem Hohlrad oder sonstige Kombinationen von durchgehenden oder geteilten Sonnenräder und Hohlrädern unterschiedlicher Elastizität vorgesehen sein. Die Planetenrollen können auch gestuft sein.

Um die Verformung des zweiten Hohlrades 56 auf eine starre Welle für den Abtrieb 54 zu übertragen oder alternativ gehäusefest abzustützen, wird das zweite Hohlrad 56 von einem dieses radial außen umschließenden Elastomerbett 50 aufgenommen, beispielsweise einem Gummiring, welches wiederum radial innerhalb einer Halterung 52 angeordnet ist. Das Elastomerbett 50 kann auch als weiterer Bestandteil des einen Metallring aufweisenden Hohlrades 56 angesehen werden. Anstelle des Elastomerbettes 50 können aber auch elastische Speichen für das zweite Hohlrad 56 oder ein axialer oder radialer Abgriff, gegebenenfalls unter Zwischenschaltung eines Topfes mit verformbaren Wänden oder einer Dämpferelemente aufweisenden Lochscheibe, vorgesehen sein. Die geringfügig ungleichförmige Bewegung des Hohlrades 56 wird vorzugsweise nicht oder nur geringfügig kompensiert.

Die bevorzugte Kombination dieses dritten Getriebestufentyps erfolgt mit der ersten oder zweiten Motorvariante, kann aber auch mit anderen Motorvarianten, einschließlich bürstenkommutierter Motoren, erfolgen. Das erste Hohlrad 36 wird beispielsweise gehäusefest, d.h. mit dem Stator 16 verbunden. Das als Antrieb dienende Sonnenrad 32 wird mit dem Innenrotor 22 (bzw. dem Außenrotor 24) verbunden, während das zweite Hohlrad 56 als Abtrieb 54 dient. Hierbei wird die beispielsweise als Hohlwelle ausgebildete Abtriebswelle mit einem glockenartigen Endstück am zweiten Hohlrad 56 angebracht, genauer gesagt an dessen Halterung 52. Die jeweiligen Durchmesser müssen allenfalls in den gleichen Größenordnungen sein, so dass durch die Wahl der Durchmesser eine weitere Übersetzungsmöglichkeit besteht. Vorzugsweise sind die axialen Längen von Sonnenrad 32, Planetenrollen 34 und Hohlrad 36 so groß gewählt, dass mittels der Getriebestufe 14 eine Lagerung des Innenrotors 22 und des Außenrotors 24 relativ zum Stator 16 erfolgt. Mit dem gewählten Aufbau des dritten Getriebestufentyps ist auch eine gesonderte Lagerung des Sonnenrades 32 und damit des Innenrotors 22 (bzw. Außenrotors 24) sowie des zweiten Hohlrades 56, d.h. des Abtriebs 54, entbehrlich, schließt sie aber nicht aus.

Die Getriebestufe 14 ist als Schaltgetriebe ausgeführt, mittels welchem bei einer (bei einem einzigen Rotor 22 oder 24 einzigen) immer gleichbleibenden Drehrichtung des Motors 12 die Drehrichtung des Abtriebs 54 zwischen zwei unterschiedlichen Abtriebsdrehrichtungen schaltbar ist, was im folgenden anhand des zweiten Getriebestufentyps näher erläutert ist. Wie beim zweiten Getriebestufentyp ausgeführt, sitzt auf dem Sonnenrad 32 ein Satz innerer Planetenrollen 34, auf welchem wiederum ein Satz erster Planetenrollen 40 angeordnet ist, der von einem ersten Außenring 44 vorgespannt gehalten wird, und axial hierzu versetzt ein Satz zweiter Planetenrollen 42, der von einem zweiten Außenring 46 vorgespannt gehalten wird. Der zweite Außenring 46 bildet einen Teil des Abtriebs 54. Die axiale Länge der in neren Planetenrollen 34 ist so gewählt, dass axial neben dem ersten Außenring 44 auf der vom zweiten Außenring 46 abgewandten Seite ein dritter Außenring 58 angeordnet ist, welcher mit Vorspannung die inneren Planentenrollen 34 direkt umfasst. Die Außendurchmesser des ersten Außenrings 44 und des dritten Außenrings 58 stimmen zumindest näherungsweise überein.

Eine Schlingfeder 60 ist in ihrer Mitte gehäusefest abgestützt und ansonsten mit einem Teil ihrer Windungen um den ersten Außenring 44 und mit einem anderen Teil ihrer Windungen um den dritten Außenring 58 geschlungen. An den beiden freien Enden der Schlingfeder 60 ist jeweils ein Permanentmagnet als Haltemagnet 61 angeordnet, wobei die einander zugewandten Pole der beiden Haltemagnete 61 einander abstoßen. Die Haltemagneten 61 weisen vorzugsweise eine hohe Permeabilität auf, beispielsweise indem sie Metalle aus der Gruppe der seltenen Erden enthalten. Zwischen den beiden Haltemagneten 61 ist ein Kern 62 aus Weicheisen angeordnet, um den herum eine mit wahlweiser Polung bestrombare Schaltspule 63 gewickelt ist.

Im unbestromten Zustand der Schaltspule 63 liegen beide Haltemagnete 61 am Kern 62 an, welcher den magnetischen Fluss jeweils lokal schließt. Beide Außenringe 44 und 58 und damit die Getriebestufe 14 sind dadurch festgestellt. Mit Aufnahme der Bestromung der Spulen 20 des Stators 16 wird auch die Schaltspule 63 bestromt. Je nach Stromrichtung wird einer der beiden Haltemagnete 61 weiterhin angezogen und der andere abgestoßen. Letzterer öffnet dadurch diese Seite der Schlingfeder 60, wodurch der entsprechende Außenring 44 oder 58 freigegeben wird. Aufgrund der kleinen Durchmesserunterschiede der Außenringe 44 und 58, welche normalerweise Drehzahlunterschiede bewirken, definiert sich je nachdem, welcher Außenring 44 oder 58 festgestellt wird, bei gleichbleibender Drehrichtung des Motors 12 und damit des Sonnenrades 32 aus dem Feststellen die Drehrichtung des zweiten Außenringes 46 und damit des Abtriebs 54, wobei die beiden möglichen Abtriebsdrehrichtungen entgegengesetzt zueinander sind (Unidirektionalmotor).

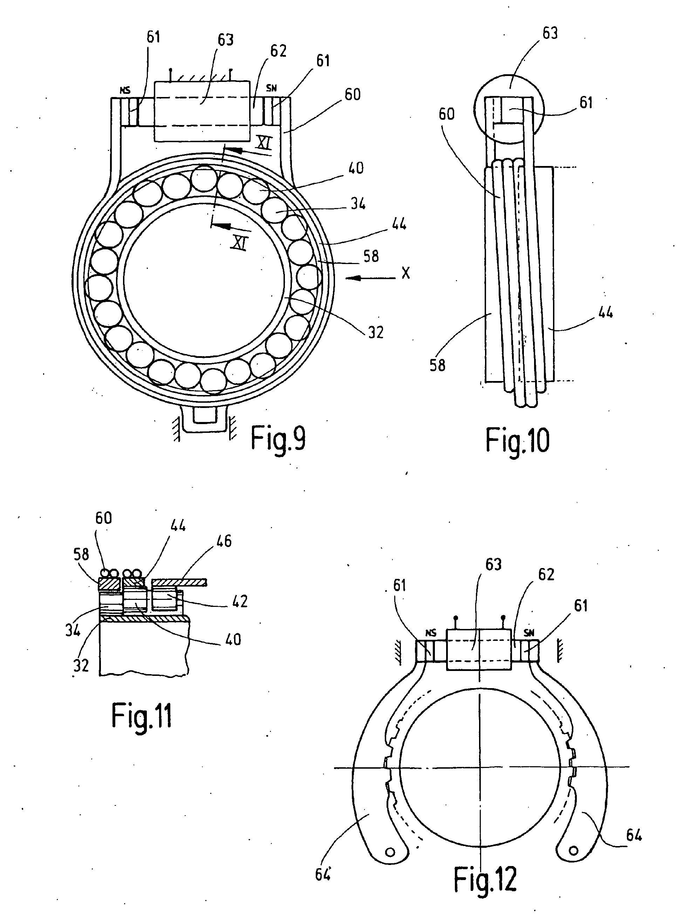

Außer dem beschriebenen Schaltgetriebe mit reibschlüssiger Feststelleinrichtung ist in abgewandelter Ausführung auch ein Schaltgetriebe mit einer formschlüssigen Lösung denkbar. Wie in Fig. 12 dargestellt, können die Haltemagnete 61 bespielsweise an Zahnklinken 64 angeordnet sein, welche die jeweils eine Verzahnung tragenden Außenringe schaltbar verriegeln. Die Funktionsweise ist wie zuvor beschrieben.

Die Feststelleinrichtung kann auch dazu dienen, im Ruhezustand Drehmomente zu sperren, die vom Abtrieb 54 eingeleitet werden. Ein solches Sperren braucht nicht an der Getriebestufe 14 erfolgen, es kann auch zwischen Motor 12 und Getriebestufe 14 vorgesehen sein.

Bei der dritten Motorvariante mit zwei Rotoren 22 und 24 können zwei immer gleichbleibende Drehrichtungen an das Schaltgetriebe abgegeben werden, welches diese wahlweise blockiert oder an den Abtrieb 54 weitergibt.

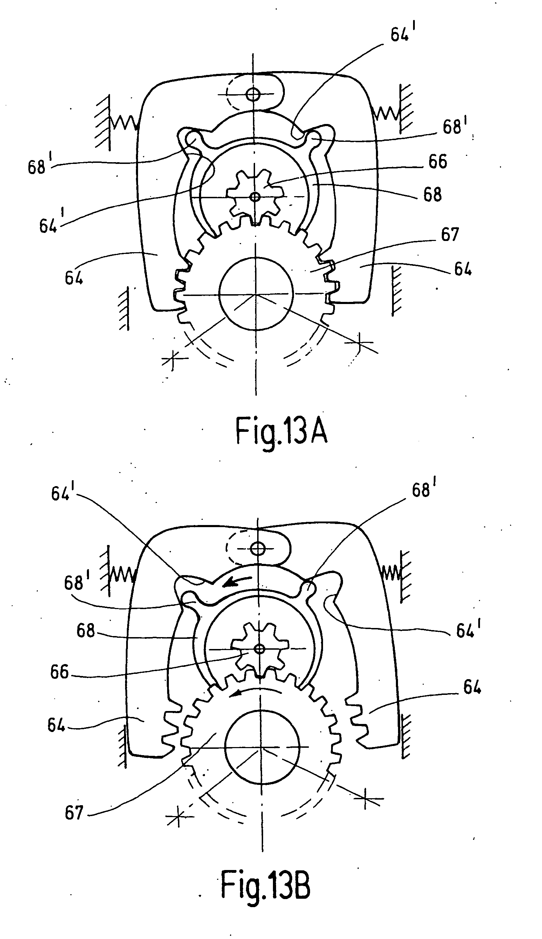

Wie in Fig. 13A dargestellt, ist beispielsweise die Abtriebswelle des Motors 12 einerseits mit einem Motorritzel 66 versehen, welches in ein mit dem Sonnenrad 32 verbundenes Zwischenrad 67 greift, und andererseits reibschlüssig mit einer Steuerscheibe 68 mit zwei Nocken 68' verbunden. Im Ruhezustand greifen zwei federbelastete Zahnklinken 64 wenigstens näherungsweise formschlüssig in das Zwischenrad 67 und sperren dieses, insbesondere gegen abtriebseitig eingeleitete Drehmomente. Mit Einsetzen der Drehbewegung des Motors 12 wird die Steuerscheibe 68 mitgedreht, wobei die Nocken 68' in Anlage an Steuerkonturen 64' der Zahnklinken 64 kommen und dadurch die Zahnklinken 64 aus dem Zwischenrad 67 ausheben, wie in Fig. 13B dargestellt. Das Zwischenrad 67 kann nun ungehindert angetrieben werden, wobei der Reibschluß zur Steuerscheibe 68 vorzugsweise aufgehoben wird. Bei einer bevorzugten Ausführungsvariante ist die Steuerscheibe 68 nicht reibschlüssig mit einer drehenden Achse, sondern drehfest mit dem nicht rotierenden Motorteil und dieses wiederum um einen geringen Winkelbereich drehbar zum Gehäuse gelagert. Infolge des Drehmomentes zwischen Motorritzel 66 und derart angebundener Steuerscheibe 68 verdreht sich dies e nun automatisch beim Einschalten des Motors 12 und steuert somit die Zahnklinken 64 ebenfalls automatisch aus. Die Art der Motorkommutierung ist für diese Feststelleinrichtung unerheblich. Das Sperren kann auch in einer reibschlüssigen Ausführung erfolgen.

In bestimmten, besonderen Situationen kann es wünschenswert sein, dass die Antriebseinheit 10 eine höhere Drehzahl und/oder ein höheres Drehmoment abgibt. Eine solche Situation ist - im Falle eines Einsatzes der Antriebsvorrichtung 10 in einem Fahrzeug - ein Crash. Die von der Antriebseinheit 10 angetriebenen Vorrichtungen sollen dann möglichst rasch bestimmte Stellungen einnehmen, um den Insassenschutz zu erhöhen, wofür hierfür in Kauf genommen wird, dass die Antriebseinheit 10 eventuell anschließend unbrauchbar ist. Eine weitere besondere Situation wäre eine Schnelleinstellung eines oder mehrerer Einsteller eines Fahrzeugsitzes über einen großen Bereich hinweg, beispielsweise ein Vorklappen der Lehne (Freischwenken) in Kombination mit einer Längseinstellung, um den Zugang zu einer hinteren Sitzreihe zu erleichtern (Easy-Entry).

Eine mechanische Lösung für die Schnelleinstellung wäre bei dem zweiten und dritten Getriebestufentyp in der Ausbildung als Schaltgetriebe mit wählbarer Getriebeübersetzung realisierbar, wenn der Unterschied der Geometrien der Außenringe 44 und 46 oder der Elastizitäten der Hohlräder 36 und 56 genügend groß ist. Unter Einsatz der beim Schaltgetriebe vorhandenen Feststelleinrichtung, welche durch Umschalten abwechselnd genau einen Außenring 44 oder 46 oder genau ein Hohlrad 36 oder 56 feststellt, können am Abtrieb unterschiedliche Geschwindigkeiten und damit unterschiedliche Getriebeübersetzungen erzeugt werden. Aufgrund der oben beschriebenen Situation beim Unidirektionalinotor mit gleichbleibender Drehrichtung des Motors 12 ändert sich allerdings die Drehrichtung des Abtriebs.

Im Falle eines Betriebs des Motors 12 mit einer Sternschaltung der Spulen 20 besteht die Möglichkeit, in der besonderen Situation den Betrieb in eine Sternschaltung mit Mittelanzapfung umzuschalten, um den effektiven Widerstand zu verringern und die Leistung ebenfalls kurzfristig zu erhöhen. Die Bestromung mit der Sternschaltung eignet sich auch besonders gut für eine Kombination mit der dritten Motorvariante und einer Feststelleinrichtung. Einer der beiden Rotoren gemäß der dritten Motorvariante wird bei Eintreten der besonderen Situation mittels der Feststelleinrichtung mechanisch blockiert. Die nachgeschaltete Getriebestufe 14 wirkt dann als Differentialgetriebe mit höherer Übersetzung (weniger geringerer Untersetzung). Der andere Rotor läuft nach Umschaltung auf die Mittelanzapfung wegen des geringeren Widerstandes mit höherer Leistungsaufnahme, was dann letztendlich die gewünschte Leistungserhöhung am Abtrieb 54 bewirkt.

Die erfindungsgemäß vorgesehene Antriebseinheit 10 wird vorliegend zum Antrieb eines Einstellers 80 innerhalb eines Fahrzeuges verwendet, wobei die Antriebseinheit 10 auch anderswo eingesetzt werden kann. Der Einsteller 80 weist im allgemeinen Fall zwei relativ zueinander bewegbare Bauteile auf, zwischen denen die Antriebseinheit 10 mit ihrem Abtrieb 54 wirkt. Die geringe Drehzahl des Abtriebs 54 liefert ein großes Drehmoment. Es können Mittel zur Umsetzung der Drehbewegung des Abtriebs 54 in eine Linearbewegung im Einsteller 80 vorgesehen sein. Es kann auch für jede Einstellrichtung des Einstellers 80 eine eigene Antriebseinheit vorgesehen sein.

In etlichen Anwendungsfällen wirken zwei gleichartige, einzelne Einsteller 80 zusammen, um gemeinsam ein Bauteil zu bewegen. Beispielsweise sind bei Fahrzeugsitzen in der Regel auf beiden Fahrzeugsitzseiten die gleichen, einzelnen Einsteller 80 vorhanden, welche in bekannter Lösung paarweise mittels einer drehbaren Übertragungsstange gekoppelt und synchronisiert sind. Mit der erfindungsgemäßen Antriebseinheit 10, die nur sehr wenig Bauraum bedarf, kann für jeden einzelnen Einsteller 80 eines Paares eine eigene Antriebseinheit 10 vorgesehen sein, welche dann beispielsweise mittels der Elektronik zur elektronischen Kommutierung des Motors 12 oder - im Falle eines Fahrzeugsitzes - über die Steifigkeit der Struktur des Fahrzeugsitzes synchronisiert sind.

### Bezugszeichenliste

- 10: Antriebseinheit
- 12: Motor
- 14: Getriebestufe
- 16: Stator
- 18: Statorpol
- 20: Spule
- 22: Innenrotor
- 24: Außenrotor
- 26: Permanentmagnet
- 28: Innenrückschlußring
- 30: Außenrückschlußring
- 32, 32': Sonnenrad
- 34: (innere) Planetenrolle
- 34': Planetenrad
- 36, 36': (erstes) Hohlrad
- 38: Steg
- 40: erste äußere Planetenrolle
- 42: zweite äußere Planetenrolle
- 44: erster Außenring
- 46: zweiter Außenring
- 48: Metallring
- 50: Elastomerbett
- 52: Halterung
- 54: Abtrieb
- 56: zweites Hohlrad
- 58: dritter Außenring
- 60: Schlingfeder
- 61: Haltemagnet
- 62: Kern
- 63: Schaltspule
- 64: Zahnklinke
- 64': Steuerkontur
- 66: Motorritzel
- 67: Zwischenrad
- 68: Steuerscheibe
- 68': Nocken
- 80: Einsteller

## Patentansprüche

1. Antriebseinheit (10) für einen Fahrzeugsitz, insbesondere für einen Kraftfahrzeugsitz, mit wenigstens einem Motor (12) und wenigstens einer abtriebsseitig vom Motor (12) vorgesehenen Getriebestufe (14) mit einem Abtrieb (54), wobei die Getriebestufe (14) als Schaltgetriebe ausgebildet ist, mittels welchem bei einer immer gleichbleibenden Drehrichtung des Motors (12) die Drehrichtung des Abtriebs (54) definiert wird und zwischen zwei unterschiedlichen Abtriebsdrehrichtungen schaltbar ist, **dadurch gekennzeichnet, dass** die als Schaltgetriebe wirksame Getriebestufe (14) eine Feststelleinrichtung für wenigstens zwei unterschiedliche Bauteile der Getriebestufe (14) aufweist, wobei zu einem reibschlüssigen Feststellen eine Schlingfeder (60) vorgesehen ist oder zu einem formschlüssigen Feststellen wenigstens eine Zahnklinke (64) vorgesehen ist.

2. Antriebseinheit nach Anspruch 1, **dadurch gekennzeichnet, dass** die Antriebseinheit (10) in einem Einsteller (80) eines Fahrzeugsitzes einsetzbar ist.

3. Antriebseinheit nach Anspruch 1 oder 2, **dadurch gekennzeichnet, dass** der Motor (12) ein elektronisch kommutierter, bürstenloser Motor ist.

4. Antriebseinheit nach einem der vorhergehenden Ansprüche, **dadurch gekennzeichnet, dass** die Getriebestufe (14) als wenigstens einstufiges Planeten-Differentialgetriebe mit einem oder mehreren Sonnenrädern (32; 32'), wenigstens einem Satz Planetenrollen (34) oder -rädern (34') und einem oder mehreren Hohlrädern (36, 36', 56) oder Außenringen (44, 46) ausgebildet ist.

5. Antriebseinheit nach Anspruch 4, **dadurch gekennzeichnet, dass** zwei Sonnenräder (32) unterschiedliche Außendurchmesser oder Außenumfänge und/oder zwei Außenringe (44, 46) unterschiedliche Innendurchmesser und/oder zwei Hohlräder (36, 56) unterschiedliche Innenumfänge und/oder zwei Sonnenräder (32) und/oder zwei Hohlräder (36, 56) unterschiedliche Elastizitäten aufweisen.

6. Antriebseinheit nach Anspruch 4 oder 5, **dadurch gekennzeichnet, dass** wenigtens zwei unterschiedliche Außenringe (44,58) und/oder Hohlräder (36, 56) und/oder Sonnenräder (32) schaltbar feststellbar sind.

7. Antriebseinheit nach Anspruch 6, **dadurch gekennzeichnet, dass** beim Feststellen von den zwei benachbarten Getriebeelementen mit unterschiedlichem Durchmesser oder Elastizität oder Innenumfang eines gehäusefest und eines mit dem Abtrieb (54) verbunden wird.

8. Antriebseinheit nach Anspruch 7, **dadurch gekennzeichnet, dass** das Sonnenrad (32) drehfest mit einem Rotor (22, 24) des Motors (12) verbunden ist, ein Außenring (44) oder ein Hohlrad (36) mit einem Stator (16) verbunden wird und ein Außenring (46) oder ein Hohlrad (56) mit dem Abtrieb (54) verbunden wird.

9. Antriebseinheit nach einem der vorhergehenden Ansprüche, **dadurch gekennzeichnet, dass** bei Einschalten der Antriebeinheit (10) das Feststellen automatisch und mechanisch aufgehoben wird.

10. Antriebseinheit nach einem der vorhergehenden Ansprüche, **dadurch gekennzeichnet, dass** zum Schalten eine Schaltspule (63) mit einem Kern (62) vorgesehen ist, welche mit zueinander abstoßend angeordneten Haltemagnete (61) zusammenwirkt.

## Claims

1. A drive unit (10) for a vehicle seat, in particular for a motor vehicle seat, having at least one motor (12) and at least one gear stage (14) provided on the output side of the motor (12) with an output (54), wherein the gear stage (14) is designed as a switch gear, in which the direction of rotation of the output (54) is defined and can be selected between two different directions of rotation of the output (54), while retaining one sole permanent direction of rotation of the motor (12), **characterized in that** the gear stage (14) being effective as a switch gear comprises a locking device for at least two different components of the gear stage (14), wherein a wrap spring (60) is provided for a friction-type locking, or at least one toothed pawls (64) is provided for a positive-acting locking.

2. A drive unit according to claim 1, **characterized in that** the drive unit (10) is used in an adjuster (80) of a vehicle seat.

3. A drive unit according to claim 1 or 2, **characterized in that** the motor (12) is a electronically commutated, brushless motor.

4. A drive unit according to one of the preceding claims, **characterized in that** the gear stage (14) is designed as an at least single-stage planetary differential gear having one or more sun gears (32; 32'), at least one set of planet rollers (34) or gears (34') and one or more hollow gears (36, 36', 56) or outer rings (44, 46).

5. A drive unit according to claim 4, **characterized in that** two sun gears (32) have different outer diameters or outer circumferences and/or elasticities and/or two outer rings (44, 46) have different inner diameters and/or two hollow gears (36, 56) have different inner circumferences or elasticities.

6. A drive unit according to claim 4 or 5, **characterized in that** at least two different outer rings (44, 46) and/or hollow gears (36, 56) and/or sun gears (32) can switchably be locked.

7. A drive unit according to claim 6, **characterized in that** during locking one of the two adjacent gear elements having different diameters or elasticities or inner circumferences is locked to the housing and one of them is locked to the output (54).

8. A drive unit according to claim 7, **characterized in that** the sun gear (32) is rigidly connected to a rotor (22, 24) of the motor (12), one outer ring (44) or one hollow gear (36) is connected to the stator (16), and one outer ring (46) or hollow gear (56) is connected with the output (54).

9. A drive unit according to one of the preceding claims, **characterized in that** the locking is automatically and mechanically released when the drive unit (10) is switched on.

10. A drive unit according to one of the preceding claims, **characterized in that** a switching coil (63) with the core (62) is provided for switching, which interacts with holding magnets (61) arranged to repel each other.

## Revendications

1. Unité d'entraînement (10) pour un siège de véhicule, en particulier pour un siège de véhicule automobile, avec au moins un moteur (12) et au moins un étage de transmission (14) monté à la sortie du moteur (12) et doté d'un arbre d'entraînement (54), dans lequel l'étage de transmission (14) est configuré comme transmission à changement de vitesse, grâce à laquelle, pour une direction de rotation toujours identique du moteur (12), la vitesse de rotation de l'arbre d'entraînement (54) est définie et est commutable entre deux directions différentes de rotation de l'arbre d'entraînement, **caractérisé par le fait que** l'étage de transmission (14) agissant comme transmission à changement de vitesse possède un dispositif d'immobilisation pour au moins deux pièces différentes de l'étage de transmission (14), un ressort de retenue (60) étant prévu pour réaliser une immobilisation par friction ou au moins un cliquet denté (64) étant prévu pour réaliser une immobilisation par obstacle.

2. Unité d'entraînement selon la revendication 1, **caractérisée par le fait que** l'unité d'entraînement (10) est utilisable dans un dispositif de réglage (80) d'un siège de véhicule.

3. Unité d'entraînement selon l'une des revendications 1 ou 2, **caractérisée par le fait que** le moteur (12) est un moteur sans balais, à commutation électronique.

4. Unité d'éntraînement selon l'une des revendications précédentes, **caractérisée par le fait que** l'étage de transmission (14) est réalisé sous la forme d'un engrenage différentiel planétaire à au moins un étage, avec une ou plusieurs roues solaires (32 ; 32'), au moins un jeu de galets planétaires (34) ou roues planétaires (34') et une ou plusieurs couronnes (36, 36', 56) ou bagues extérieures (44, 46).

5. Unité d'entraînement selon la revendication 4, **caractérisée par le fait que** deux roues solaires (32) présentent des diamètres extérieurs différents ou des périmètres extérieurs différents et/ou **par le fait que** deux bagues extérieures (44, 46) présentent des diamètres intérieurs différents et/ou **par le fait que** deux couronnes (36, 56) présentent des périmètres intérieurs différents et/ou **par le fait que** deux roues solaires (32) et/ou deux couronnes (36, 56) présentent des élasticités différentes.

6. Unité d'entraînement selon l'une des revendications 4 ou 5, **caractérisée par le fait qu'**au moins deux bagues extérieures (44, 58) différentes et/ou couronnes (36, 56) et/ou roues solaires différentes (32) sont immobilisables de façon sélective.

7. Unité d'entraînement selon la revendication 6, **caractérisée par le fait que**, lors de l'immobilisation des deux éléments de transmission voisins ayant un diamètre différent ou une élasticité différente ou un périmètre intérieur différent, l'un est solidarise avec le carter, et l'autre, avec l'arbre d'entraînement (54).

8. Unité d'entraînement selon la revendication 7, **caractérisée par le fait que** la roue solaire (32) est solidaire en rotation avec un rotor (22, 24) du moteur (12), une bague extérieure (44) ou une couronne (36) est reliée à un stator (16) et une bague extérieure (46) ou une couronne (56) est reliée à l'arbre d'entraînement (54).

9. Unité d'entraînement selon l'une des revendications précédentes, **caractérisée par le fait que** l'immobilisation est mise hors service automatiquement et mécaniquement lors de la mise en service de l'unité d'entraînement (10).

10. Unité d'entraînement selon l'une des revendications précédentes, **caractérisée par le fait qu'**il est prévu pour la commutation une bobine de commutation (63) avec un noyau (62), qui coopère avec des aimants de maintien (61) se repoussant mutuellement.
